# EUROPEAN PATENT APPLICATION

(11) **EP 4 610 907 A1**
(43) Date of publication of application: **03.09.2025**
(21) Application number: 23882727.3
(22) Date of filing: 26.10.2023
(51) Int. Cl.: G06Q 10/087

(54) **INFORMATION PROCESSING METHOD, INFORMATION PROCESSING DEVICE, PROGRAM, AND COMPUTER-READABLE STORAGE MEDIUM**

(30) Priority: 26.10.2022 JP 2022171618
(71) Applicant: Kabushiki Kaisha Toshiba, Tokyo 105-0023 (JP)
(72) Inventor: MATSUMURA, Atsushi, Kawasaki-shi, Kanagawa 212-0013 (JP); SHIBATA, Masamitsu, Kawasaki-shi, Kanagawa 210-0007 (JP); NAKAMATA, Hirokazu, Kawasaki-shi, Kanagawa 210-0007 (JP); SUGIYAMA, Masaaki, Kawasaki-shi, Kanagawa 212-0013 (JP); OTSURU, Yoshihide, Kawasaki-shi, Kanagawa 212-0013 (JP); EHARA, Koji, Kawasaki-shi, Kanagawa 212-0013 (JP); TAKIGUCHI, Takeru, Kawasaki-shi, Kanagawa 212-0013 (JP); SEKIGUCHI, Kana, Kawasaki-shi, Kanagawa 212-0013 (JP); EIMOTO, Yusan, Kawasaki-shi, Kanagawa 212-0013 (JP)
(74) Representative: HKW Intellectual Property PartG mbB
(86) International application number: PCT/JP2023/038743
(87) International publication number: WO 2024/090525

(57) **Abstract**

An information processing method, an information processing apparatus, and a program capable of effectively externalizing a part of a system for handling articles are provided. According to an embodiment, the information processing method includes receiving a request from a first apparatus, transmitting the request to a second apparatus, receiving a response to the request from the second apparatus, transmitting the response to the first apparatus, and transmitting data related to communication between the first apparatus and the second apparatus to a third apparatus via one-way communication.

## Description

### FIELD

Embodiments described herein relate generally to an information processing method, an information processing apparatus, a program, and a computer-readable storage medium.

### BACKGROUND

An article handling system in which articles are stored in or retrieved from racks or the like is provided. Such an article handling system is constituted by a warehouse management system that supplies an instruction for storage or retrieval, a warehouse control system that performs storage and retrieval, and the like.

Furthermore, the article handling system may include a warehouse operation management system that performs various kinds of processes between the warehouse management system and the warehouse control system. Conventionally, the warehouse operation management system communicates with the warehouse management system or the warehouse control system via two-way communication, and in a case where the warehouse operation management system is externalized (implemented in a cloud), there is a need to prepare a device or a dedicated Internet line for establishing a virtual private network.

Furthermore, in a case where communication of the warehouse operation management system with the warehouse management system or the warehouse control system is interrupted, the article handling system may not be able to continue the operation.

### CITATION LIST

### PATENT LITERATURE

Patent Literature 1: Jpn. Pat. Appln. KOKAI Publication No. 2022-100437

### SUMMARY

### TECHNICAL PROBLEM

To solve the above-described problem, an information processing method, an information processing apparatus, a program, and a computer-readable storage medium are provided which can externalize a part of an article handling system in an effective manner.

### SOLUTION TO PROBLEM

According to an embodiment, an information processing method executed by a processor includes receiving a request from a first apparatus, transmitting the request to a second apparatus, receiving a response to the request from the second apparatus, transmitting the response to the first apparatus, and transmitting data related to communication between the first apparatus and the second apparatus to a third apparatus via one-way communication.

### BRIEF DESCRIPTION OF THE DRAWINGS

FIG. 1 is a block diagram illustrating a configuration example of an article handling system according to a first embodiment.
FIG. 2 is a block diagram illustrating a configuration example of a WES Hub according to the first embodiment.
FIG. 3 is a sequence diagram illustrating an operation example of the article handling system according to the first embodiment.
FIG. 4 is a sequence diagram illustrating an operation example of the article handling system according to the first embodiment.
FIG. 5 is a sequence diagram illustrating an operation example of the article handling system according to the first embodiment.
FIG. 6 is a sequence diagram illustrating an operation example of the article handling system according to the first embodiment.
FIG. 7 is a sequence diagram illustrating an operation example of the article handling system according to the first embodiment.
FIG. 8 is a sequence diagram illustrating an operation example of the article handling system according to the first embodiment.
FIG. 9 is a sequence diagram illustrating an operation example of the article handling system according to the first embodiment.
FIG. 10 is a sequence diagram illustrating an operation example of the article handling system according to the first embodiment.
FIG. 11 is a sequence diagram illustrating an operation example of the article handling system according to the first embodiment.
FIG. 12 is a sequence diagram illustrating an operation example of the article handling system according to the first embodiment.
FIG. 13 is a sequence diagram illustrating an operation example of the article handling system according to the first embodiment.
FIG. 14 is a sequence diagram illustrating an operation example of the article handling system according to the first embodiment.
FIG. 15 is a sequence diagram illustrating an operation example of the article handling system according to the first embodiment.
FIG. 16 is a sequence diagram illustrating an operation example of the article handling system according to the first embodiment.
FIG. 17 is a sequence diagram illustrating an operation example of the article handling system according to the first embodiment.
FIG. 18 is a sequence diagram illustrating an operation example of the article handling system according to the first embodiment.
FIG. 19 is a block diagram illustrating a configuration example of an article handling system according to a second embodiment.
FIG. 20 is a sequence diagram illustrating an operation example of the article handling system according to the second embodiment.
FIG. 21 is a block diagram illustrating a configuration example of an article handling system according to a third embodiment.

### DETAILED DESCRIPTION

Hereinafter, embodiments will be described with reference to the drawings.

### (First Embodiment)

First, the first embodiment will be described.

An article handling system according to an embodiment stores or retrieves articles in or from racks in a physical distribution system or the like. For example, the article handling system transports racks to a picking station or the like. The article handling system stores or picks articles in or from racks using an operator or a robot at the picking station.

For example, the article handling system is used in a distribution center, a warehouse, or the like.

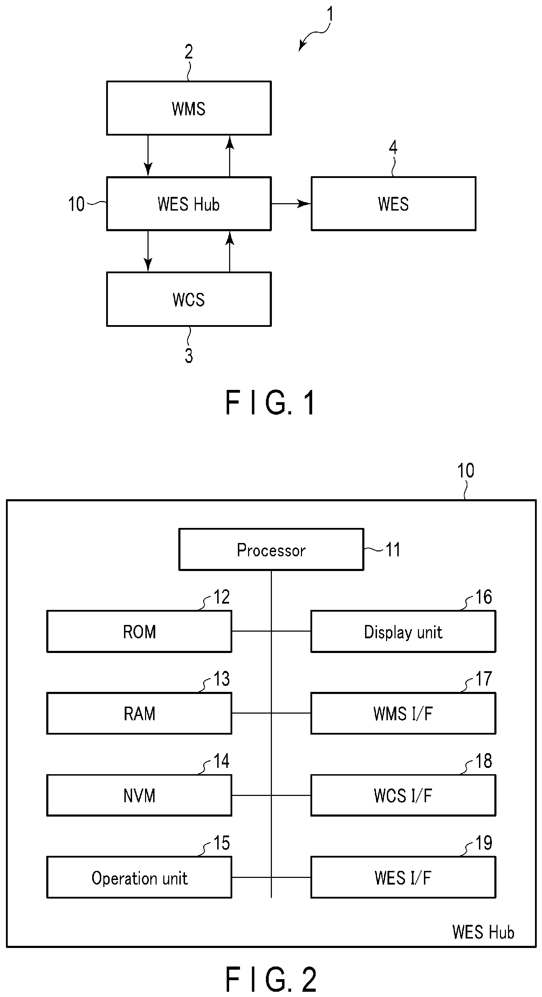

FIG. 1 shows a configuration example of an article handling system 1 according to the embodiment. As shown in FIG. 1, the article handling system 1 includes a WMS 2, a WCS 3, a WES 4, a WES Hub 10, and the like.

The WES Hub 10 is connected to the WMS 2 and the WCS 3 through a local network or the like. The WES Hub 10 communicates with the WMS 2 and the WCS 3 via two-way communication.

The WES Hub 10 is connected to the WES 4 through an external network or the like. The WES Hub 10 communicates with the WES 4 via one-way communication from the WES Hub 10 to the WES 4.

Herein, the WMS 2, the WCS 3, the WES 4, and the WES Hub 10 communicate with each other using REST API.

The article handling system 1 may include other configurations as needed in addition to the configuration shown in FIG. 1, or a specific configuration may be excluded from the article handling system 1.

The WMS 2 (Warehouse Management System) (first apparatus) is called a warehouse management system and can be realized by one or more computers. The WMS 2 transmits various requests to the WCS 3 via the WES Hub 10.

For example, the WMS 2 transmits a storage instruction to the WCS 3 via the WES Hub 10 to provide an instruction to store an article on a rack or the like. For example, the storage instruction is constituted by a plurality of storage slips. The WMS 2 transmits a retrieval instruction to the WCS 3 to provide an instruction to retrieve an article from a rack or the like. For example, the retrieval instruction is constituted by a plurality of retrieval slips.

The WMS 2 receives various responses from the WCS 3 via the WES Hub 10.

The WCS 3 (Warehouse Control System) (second apparatus) is called a warehouse control system and can be realized by one or more computers. The WCS 3 controls equipment (material handling equipment) that handles articles based on the storage instruction or the retrieval instruction from the WES Hub 10. For example, the WCS 3 controls a rack transport robot that transports racks as material handling equipment. The WCS 3 controls an article handling robot that picks or stores an article from or on a rack as material handling equipment. The material handling equipment controlled by the WCS 3 is not limited to a specific configuration.

The WCS 3 transmits various requests to the WMS 2 via the WES Hub 10. The WCS 3 receives responses from the WMS 2 via the WES Hub 10.

The WES 4 (Warehouse Execution System) (third apparatus) is called a warehouse operation management system and can be realized by one or more computers. The WES 4 executes various processes related to an operation of the article handling system 1.

For example, the WES 4 monitors communication between the WMS 2 and the WCS 3. The WES 4 manages communication between the WMS 2 and the WCS 3 as a log.

The WES 4 optimizes an order (a storage instruction or a retrieval instruction) from the WMS 2. For example, the WES 4 optimizes a sequence of handling (a sequence of storage slips or retrieval slips) in the order. The WES 4 may divide the order into a plurality of orders. For example, in a case where the retrieval instruction contains a retrieval slip with a transportation truck departure time of 18:00 and a retrieval slip with a transportation truck departure time of 20:00 mixed together, the WES 4 divides the retrieval instruction into a retrieval instruction with the retrieval slip of 18:00 and a retrieval instruction with the retrieval slip of 20:00.

The WES Hub 10 (information processing apparatus) relays communication between the WMS 2 and the WCS 3. The WES Hub 10 transmits data related to communication between the WMS 2 and the WCS 3 to the WES 4.

FIG. 2 is a block diagram illustrating a configuration example of the WES HUB 10. As shown in FIG. 2, the WES HUB 10 includes a processor 11, a ROM 12, a RAM 13, an NVM 14, an operation unit 15, a display unit 16, a WMS interface 17, a WCS interface 18, a WES interface 19, and the like.

The processor 11, the ROM 12, the RAM 13, the NVM 14, the operation unit 15, the display unit 16, the WMS interface 17, the WCS interface 18, and the WES interface 19 are connected to each other via a bus or the like.

The WES HUB 10 may include other configurations as needed in addition to the configuration illustrated in FIG. 2, or a specific configuration may be excluded from the WES HUB 10.

The processor 11 has a function of controlling the operation of the entire WES HUB 10. The processor 11 may include an internal cache, various interfaces, and the like. The processor 11 realizes various processes by executing programs stored in advance in the internal memory, the ROM 12, or the NVM 14.

Some of the various functions realized by the processor 11 executing the programs may be realized by a hardware circuit. In this case, the processor 11 controls the functions executed by the hardware circuit.

The ROM 12 is a nonvolatile memory in which a control program, control data and the like are stored in advance. The control program and the control data stored in the ROM 12 are incorporated in advance according to the specifications of the WES HUB 10.

The RAM 13 is a volatile memory. The RAM 13 temporarily stores data, etc. being processed by the processor 11. The RAM 13 stores various application programs based on instructions from the processor 11. The RAM 13 may store data necessary for executing the application program, an execution result of the application program, etc.

The NVM 14 is a data-writable and rewritable nonvolatile memory. For example, the NVM 14 is configured by a hard disk drive (HDD), a solid-state drive (SSD), a flash memory, or the like. The NVM 14 stores control programs, applications, and various kinds of data according to the operation purpose of the WES HUB 10.

The operation unit 15 receives various operation inputs from the operator. The operation unit 15 transmits a signal indicating the input operation to the processor 11. For example, the operation unit 15 is configured by a mouse, a keyboard, a touch panel, or the like.

The display unit 16 displays data from the processor 11. For example, the display unit 16 is configured by a liquid crystal monitor. When the operation unit 15 is configured by a touch panel, the display unit 16 may be formed integrally with the touch panel as the operation unit 15.

The WMS interface 17 (first interface) is an interface that transmits and receives data to and from the WMS 2 via two-way communication. For example, the WMS interface 17 is connected to the WMS 2 via a local network or the like. For example, the WMS interface 17 supports wired or wireless local area network (LAN) connection.

The WCS interface 18 (second interface) is an interface that transmits and receives data to and from the WCS 3 via two-way communication. For example, the WCS interface 18 is connected to the WCS 3 via a local network or the like. For example, the WCS interface 18 may support wired or wireless LAN connection.

The WES interface 19 (third interface) is an interface that transmits and receives data to and from the WES 4 via one-way communication. For example, the WES interface 19 is connected to the WES 4 via an external network (e.g., the Internet) or the like. For example, the WES interface 19 supports wired or wireless LAN connection.

The WMS interface 17, the WCS interface 18, and the WES interface 19 (or some of them) may be integrally configured.

The WES Hub 10 may include an interface connected to an external display unit. In this case, the WES Hub 10 may not include the display unit 16.

Next, an operation example of the article handling system 1 will be described.

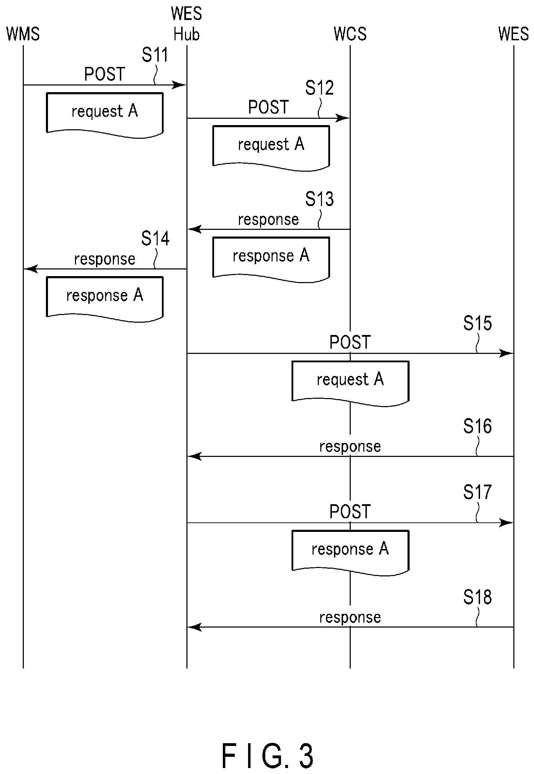

FIG. 3 is a sequence diagram illustrating an operation example of the article handling system 1.

First, the WMS 2 transmits a request A to the WES Hub 10 by POST (S11). The request A is a request (first request) requesting transmission of a communication log to the WES 4 after completion of communication between the WMS 2 and the WCS 3. For example, the request A is a request for causing the article handling system 1 to execute an operation in which a communication log is collected by the WES 4.

The processor 11 of the WES Hub 10 receives the request A from the WMS 2 via the WMS interface 17. Upon receiving the request A, the processor 11 transmits the received request A to the WCS 3 by POST via the WCS interface 18 (S12).

The WCS 3 receives the request A from the WES Hub 10. Upon receiving the request A, the WCS 3 executes a predetermined process in accordance with the request A and then transmits a response A to the WES Hub 10 (S13).

The processor 11 of the WES Hub 10 receives the response A from the WCS 3 via the WCS interface 18. Upon receiving the response A, the processor 11 transmits the received response A to the WMS 2 via the WMS interface 17 (S14).

The WMS 2 receives the response A from the WES Hub 10.

Upon transmitting the response A, the processor 11 of the WES Hub 10 transmits a request A to the WES 4 by POST via the WES interface 19 (S15). Herein, the processor 11 transmits, to the WES 4, the request A in a format similar to the request A transmitted in S12 (e.g., the same request A as the request A transmitted in S12).

The WES 4 receives the request A from the WES Hub 10. Upon receiving the request A, the WES 4 transmits a response to the WES Hub 10 (S16).

The processor 11 of the WES Hub 10 receives the response from the WES 4 via the WES interface 19. Upon receiving the response, the processor 11 transmits a response A to the WES 4 by POST via the WES interface 19 (S17). Herein, the processor 11 transmits, to the WES 4, the response A in a format similar to the response A transmitted in S14 (e.g., the same response A as the response A transmitted in S14).

The WES 4 receives the response A from the WES Hub 10. Upon receiving the response A, the WES 4 transmits a response to the WES Hub 10 (S18).

The processor 11 of the WES Hub 10 receives the response from the WES 4 via the WES interface 19. Upon the processor 11 receiving the response, the article handling system 1 ends the operation.

The processor 11 of the WES Hub 10 may transmit, in S15, data including the request A and the response A to the WES 4 by POST via the WES interface 19. In this case, the article handling system 1 may not perform S17 or S18.

In the article handling system 1, even in a case where any of S15 to S18 fails in the above-described operation example, the operation of the WMS 2 or the WCS 3 is not affected.

Next, another operation example of the article handling system 1 will be described.

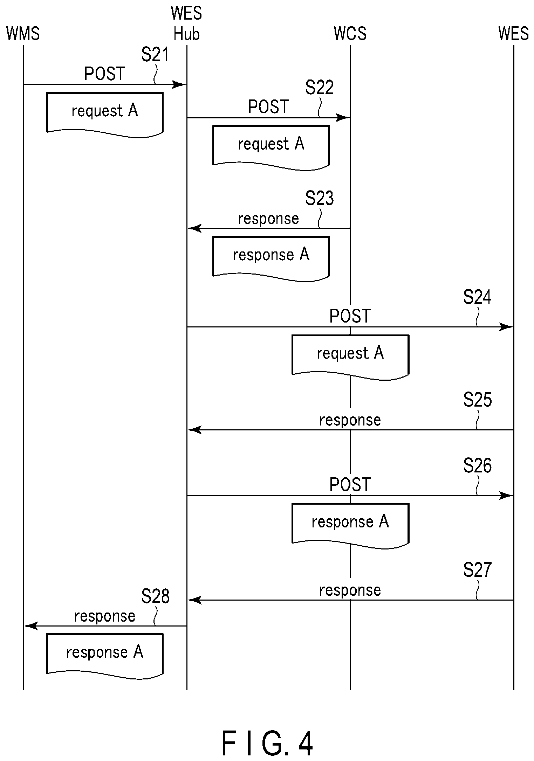

FIG. 4 is a sequence diagram illustrating another operation example of the article handling system 1.

First, the WMS 2 transmits a request A to the WES Hub 10 by POST (S21). Herein, the request A is a request (second request) requesting transmission of a communication log to the WES 4 before a response is transmitted to a transmission source (here the WMS 2). For example, the request A is a request for causing the article handling system 1 to execute an operation in which a communication log is monitored by the WES 4.

The processor 11 of the WES Hub 10 receives the request A from the WMS 2 via the WMS interface 17. Upon receiving the request A, the processor 11 transmits the received request A to the WCS 3 by POST via the WCS interface 18 (S22).

The WCS 3 receives the request A from the WES Hub 10. Upon receiving the request A, the WCS 3 executes a predetermined process in accordance with the request A and then transmits a response A to the WES Hub 10 (S23).

The processor 11 of the WES Hub 10 receives the response A from the WCS 3 via the WCS interface 18. Upon receiving the response A, the processor 11 transmits a request A to the WES 4 by POST via the WES interface 19 (S24). Herein, the processor 11 transmits, to the WES 4, the request A in a format similar to the request A transmitted in S22 (e.g., the same request A as the request A transmitted in S22).

The WES 4 receives the request A from the WES Hub 10. Upon receiving request A, the WES 4 transmits a response to the WES Hub 10 (S25).

The processor 11 of the WES Hub 10 receives the response from the WES 4 via the WES interface 19. Upon receiving the response, the processor 11 transmits a response A to the WES 4 by POST via the WES interface 19 (S26). Herein, the processor 11 transmits, to the WES 4, the response A in a format similar to the response A received in S23 (e.g., the same response A as the response A received in S23).

The WES 4 receives the response A from the WES Hub 10. Upon receiving the response A, the WES 4 transmits a response to the WES Hub 10 (S27).

The processor 11 of the WES Hub 10 receives the response from the WES 4 via the WES interface 19. Upon the processor 11 receiving the response, the processor 11 transmits a response A to the WMS 2 via the WMS interface 17 (S28).

The WMS 2 receives the response A from the WES Hub 10. Upon the WMS 2 transmitting the response A, the article handling system 1 ends the operation.

The processor 11 of the WES Hub 10 may transmit, in S24, data including the request A and the response A to the WES 4 by POST via the WES interface 19. In this case, the article handling system 1 may not perform S26 or S27.

The processor 11 of the WES Hub 10 transmits, if any of S24 to S27 fails, a response indicating an error to the WMS 2. In this case, the processor 11 may time out the request A from the WMS 2.

The WMS 2 may retransmit, if receiving a response indicating an error or timing out the request A, the request A to the WES Hub 10.

The article handling system 1 can transmit the request A and the response A to the WES 4 in a more reliable manner in the above operation example.

Next, still another operation example of the article handling system 1 will be described.

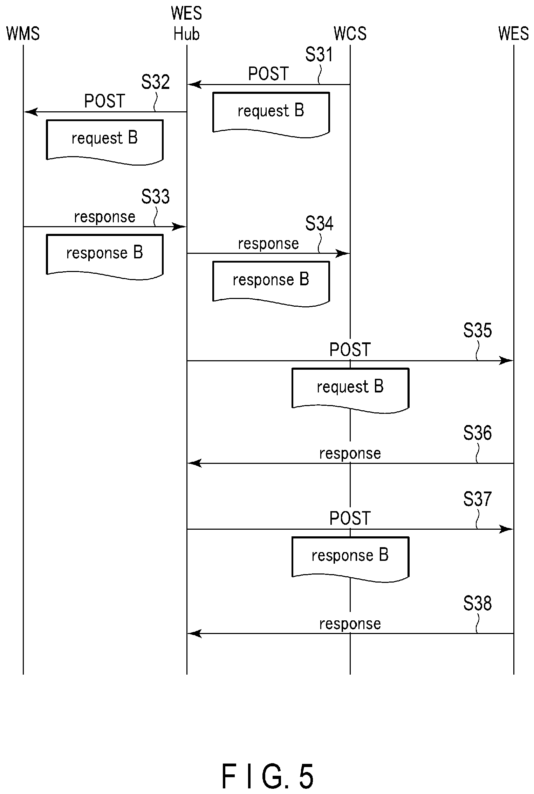

FIG. 5 is a sequence diagram illustrating still another operation example of the article handling system 1.

First, the WCS 3 transmits a request B to the WES Hub 10 by POST (S31). The request B is a first request.

The processor 11 of the WES Hub 10 receives the request B from the WCS 3 via the WCS interface 18. Upon receiving the request B, the processor 11 transmits the received request B to the WMS 2 by POST via the WMS interface 17 (S32).

The WMS 2 receives the request B from the WES Hub 10. Upon receiving the request B, the WMS 2 executes a predetermined process in accordance with the request B and then transmits a response B to the WES Hub 10 (S33).

The processor 11 of the WES Hub 10 receives the response B from the WMS 2 via the WMS interface 17. Upon receiving the response B, the processor 11 transmits the received response B to the WCS 3 via the WCS interface 18 (S34).

The WCS 3 receives the response B from the WES Hub 10.

Upon transmitting the response B, the processor 11 of the WES Hub 10 transmits a request B to the WES 4 by POST via the WES interface 19 (S35). Herein, the processor 11 transmits, to the WES 4, the request B in a format similar to the request B transmitted in S32 (e.g., the same request B as the request B transmitted in S32).

The WES 4 receives the request B from the WES Hub 10. Upon receiving the request B, the WES 4 transmits a response to the WES Hub 10 (S36).

The processor 11 of the WES Hub 10 receives the response from the WES 4 via the WES interface 19. Upon receiving the response, the processor 11 transmits a response B to the WES 4 by POST via the WES interface 19 (S37). Herein, the processor 11 transmits, to the WES 4, the response B in a format similar to the response B transmitted in S34 (e.g., the same response B as the response B transmitted in S34).

The WES 4 receives the response B from the WES Hub 10. Upon receiving the response B, the WES 4 transmits a response to the WES Hub 10 (S38).

The processor 11 of the WES Hub 10 receives the response from the WES 4 via the WES interface 19. Upon the processor 11 receiving the response, the article handling system 1 ends the operation.

The processor 11 of the WES Hub 10 may transmit, in S35, data including the request B and the response B to the WES 4 by POST via the WES interface 19. In this case, the article handling system 1 may not perform S37 or S38.

In the article handling system 1, even in a case where any of S35 to S38 fails in the above-described operation example, the operation of the WMS 2 or the WCS 3 is not affected.

Next, still another operation example of the article handling system 1 will be described.

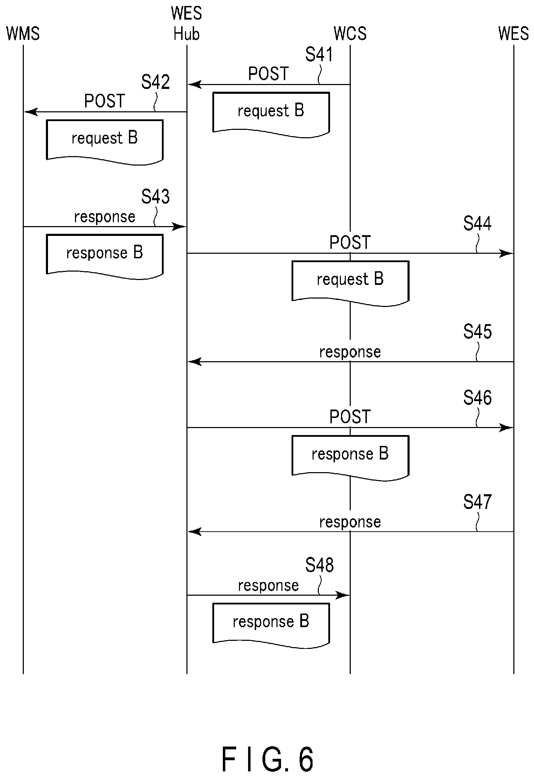

FIG. 6 is a sequence diagram illustrating still another operation example of the article handling system 1.

First, the WCS 3 transmits a request B to the WES Hub 10 by POST (S41). Herein, the request B is a second request.

The processor 11 of the WES Hub 10 receives the request B from WCS 3 via the WCS interface 18. Upon receiving the request B, the processor 11 transmits the received request B to the WMS 2 by POST via the WMS interface 17 (S42).

The WMS 2 receives the request B from the WES Hub 10. Upon receiving the request B, the WMS 2 executes a predetermined process in accordance with the request B and then transmits a response B to the WES Hub 10 (S43).

The processor 11 of the WES Hub 10 receives the response B from the WMS 2 via the WMS interface 17. Upon receiving the response B, the processor 11 transmits a request B to the WES 4 by POST via the WES interface 19 (S44). Herein, the processor 11 transmits, to the WES 4, the request B in a format similar to the request B transmitted in S42 (e.g., the same request B as the request B transmitted in S42).

The WES 4 receives the request B from the WES Hub 10. Upon receiving the request B, the WES 4 transmits a response to the WES Hub 10 (S45).

The processor 11 of the WES Hub 10 receives the response from the WES 4 via the WES interface 19. Upon receiving the response, the processor 11 transmits a response B to the WES 4 by POST via the WES interface 19 (S46). Herein, the processor 11 transmits, to the WES 4, the response B in a format similar to the response B received in S43 (e.g., the same response B as the response B received in S43).

The WES 4 receives the response B from the WES Hub 10. Upon receiving the response B, the WES 4 transmits a response to the WES Hub 10 (S47).

The processor 11 of the WES Hub 10 receives the response from the WES 4 via the WES interface 19. Upon the processor 11 receiving the response, the processor 11 transmits the response B to the WCS 3 via the WCS interface 18 (S48).

The WCS 3 receives the response B from the WES Hub 10. Upon the WCS 3 transmitting the response B, the article handling system 1 ends the operation.

The processor 11 of the WES Hub 10 may transmit, in S44, data including the request B and the response B to the WES 4 by POST via the WES interface 19. In this case, the article handling system 1 may not perform S46 or S47.

The processor 11 of the WES Hub 10 transmits, if any of S44 to S47 fails, a response indicating an error to the WCS 3. In this case, the processor 11 may time out the request B from the WCS 3.

The WCS 3 may retransmit, if receiving a response indicating an error or timing out the request B, the request B to the WES Hub 10.

The article handling system 1 can transmit the request B and the response B to the WES 4 in a more reliable manner in the above operation example.

Next, still another operation example of the article handling system 1 will be described.

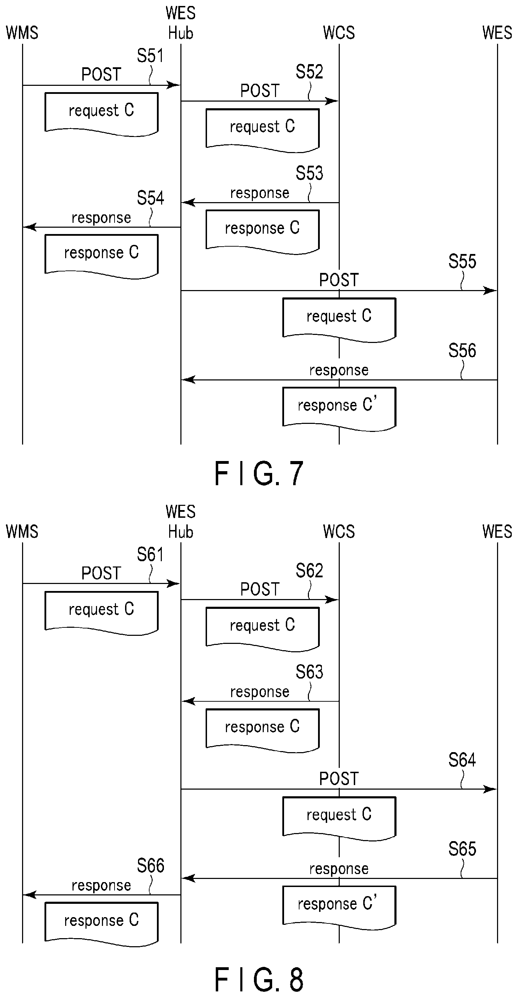

FIG. 7 is a sequence diagram illustrating still another operation example of the article handling system 1.

First, the WMS 2 transmits a request C to the WES Hub 10 by POST (S51). The request C is a first request. Herein, the request C requests transmission of the request C to the WES 4 as an operation log.

The processor 11 of the WES Hub 10 receives the request C from the WMS 2 via the WMS interface 17. Upon receiving the request C, the processor 11 transmits the received request C to the WCS 3 by POST via the WCS interface 18 (S52).

The WCS 3 receives the request C from the WES Hub 10. Upon receiving the request C, the WCS 3 executes a predetermined process in accordance with the request C and then transmits a response C to the WES Hub 10 (S53).

The processor 11 of the WES Hub 10 receives the response C from the WCS 3 via the WCS interface 18. Upon receiving the response C, the processor 11 transmits the received response C to the WMS 2 via the WMS interface 17 (S54).

The WMS 2 receives the response C from the WES Hub 10.

Upon transmitting the response C, the processor 11 of the WES Hub 10 transmits a request C to the WES 4 by POST via the WES interface 19 (S55). Herein, the processor 11 transmits, to the WES 4, the request C in a format similar to the request C transmitted in S52 (e.g., the same request C as the request C transmitted in S52).

The WES 4 receives the request C from the WES Hub 10. Upon receiving the request C, the WES 4 transmits a response C' to the WES Hub 10 (S56).

The processor 11 of the WES Hub 10 receives the response C' from the WES 4 via the WES interface 19.

Upon the processor 11 receiving the response C', the article handling system 1 ends the operation.

In the article handling system 1, even in a case where any of S55 or S55 fails in the above-described operation example, the operation of the WMS 2 or the WCS 3 is not affected.

Next, still another operation example of the article handling system 1 will be described.

FIG. 8 is a sequence diagram illustrating still another operation example of the article handling system 1.

First, the WMS 2 transmits a request C to the WES Hub 10 by POST (S61). The request C is a second request. Herein, the request C requests transmission of the request C to the WES 4 as an operation log.

The processor 11 of the WES Hub 10 receives the request C from the WMS 2 via the WMS interface 17. Upon receiving the request C, the processor 11 transmits the received request C to the WCS 3 by POST via the WCS interface 18 (S62).

The WCS 3 receives the request C from the WES Hub 10. Upon receiving the request C, the WCS 3 executes a predetermined process in accordance with the request C and then transmits a response C to the WES Hub 10 (S63).

The processor 11 of the WES Hub 10 receives the response C from the WCS 3 via the WCS interface 18. Upon receiving the response C, the processor 11 transmits a request C to the WES 4 by POST via the WES interface 19 (S64). Herein, the processor 11 transmits, to the WES 4, the request C in a format similar to the request C transmitted in S62 (e.g., the same request C as the request C transmitted in S62).

The WES 4 receives the request C from the WES Hub 10. Upon receiving the request C, the WES 4 transmits a response C' to the WES Hub 10 (S65).

The processor 11 of the WES Hub 10 receives the response C' from the WES 4 via the WES interface 19. Upon receiving the response C', the processor 11 transmits the received response C to the WMS 2 via the WMS interface 17 (S66).

The WMS 2 receives the response C from the WES Hub 10. Upon the WMS 2 transmitting the response C, the article handling system 1 ends the operation.

The processor 11 of the WES Hub 10 transmits, if S64 or S65 fails, a response indicating an error to the WMS 2. In this case, the processor 11 may time out the request C from the WMS 2.

The WMS 2 may retransmit, if receiving a response indicating an error or timing out the request C, the request C to the WES Hub 10.

The article handling system 1 can transmit the request C to the WES 4 in a more reliable manner in the above operation example.

Next, still another operation example of the article handling system 1 will be described.

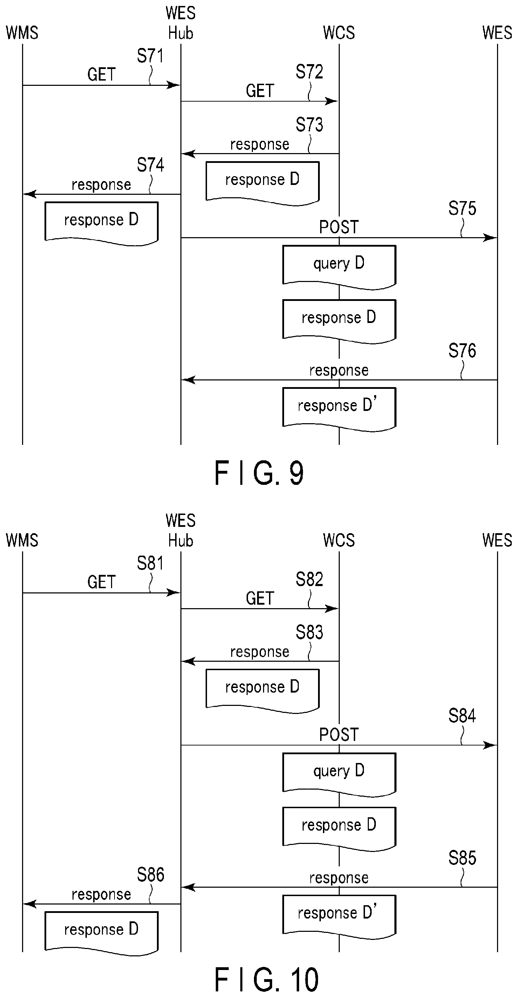

FIG. 9 is a sequence diagram illustrating still another operation example of the article handling system 1.

First, the WMS 2 transmits a request to the WES Hub 10 by GET (S71). The request is a first request. The request includes a query D. For example, the request is a request requesting predetermined data (inventory information, a product master, and the like).

The processor 11 of the WES Hub 10 receives the request from the WMS 2 via the WMS interface 17. Upon receiving the request, the processor 11 transmits the received request to the WCS 3 by GET via the WCS interface 18 (S72).

The WCS 3 receives the request D from the WES Hub 10. Upon receiving the request, the WCS 3 executes a predetermined process in accordance with the request and then transmits a response D including requested predetermined data to the WES Hub 10 (S73).

The processor 11 of the WES Hub 10 receives the response D from the WCS 3 via the WCS interface 18. Upon receiving the response D, the processor 11 transmits the received response D to the WMS 2 via the WMS interface 17 (S74).

The WMS 2 receives the response D from the WES Hub 10.

Upon transmitting the response D, the processor 11 of the WES Hub 10 transmits the query D and the response D to the WES 4 by POST via the WES interface 19 (S75).

The WES 4 receives the query D and the request D from the WES Hub 10. Upon receiving the query D and the request D, the WES 4 transmits a response D' to the WES Hub 10 (S76).

The processor 11 of the WES Hub 10 receives the response D' from the WES 4 via the WES interface 19.

Upon the processor 11 receiving the response D', the article handling system 1 ends the operation.

In the article handling system 1, even in a case where S75 or S76 fails in the above-described operation example, the operation of the WMS 2 or the WCS 3 is not affected.

Next, still another operation example of the article handling system 1 will be described.

FIG. 10 is a sequence diagram illustrating still another operation example of the article handling system 1.

First, the WMS 2 transmits a request to the WES Hub 10 by GET (S81). The request is a second request. The request includes a query D. For example, the request is a request requesting predetermined data (inventory information, a product master, and the like).

The processor 11 of the WES Hub 10 receives the request from the WMS 2 via the WMS interface 17. Upon receiving the request, the processor 11 transmits the received request to the WCS 3 by GET via the WCS interface 18 (S82).

The WCS 3 receives a request from the WES Hub 10. Upon receiving the request, the WCS 3 executes a predetermined process in accordance with the request and then transmits a response D to the WES Hub 10 (S83).

The processor 11 of the WES Hub 10 receives the response D from the WCS 3 via the WCS interface 18. Upon receiving the response D, the processor 11 transmits a query D and the response D to the WES 4 by POST via the WES interface 19 (S84).

The WES 4 receives the query D and the response D from the WES Hub 10. Upon receiving the query D and request D, the WES 4 transmits a response D' to the WES Hub 10 (S85).

The processor 11 of the WES Hub 10 receives the response D' from the WES 4 via the WES interface 19. Upon receiving the response D', the processor 11 transmits a response D to the WMS 2 via the WMS interface 17 (S86).

The WMS 2 receives the response D from the WES Hub 10. Upon the WMS 2 transmitting the response D, the article handling system 1 ends the operation.

The processor 11 of the WES Hub 10 transmits, if S84 or S85 fails, a response indicating an error to the WMS 2. In this case, the processor 11 may time out the request from the WMS 2.

The WMS 2 may retransmit, if receiving a response indicating an error or timing out the request, the request to the WES Hub 10.

The article handling system 1 can transmit the request from the WMS 2 to the WES 4 in a more reliable manner in the above operation example.

Next, still another operation example of the article handling system 1 will be described.

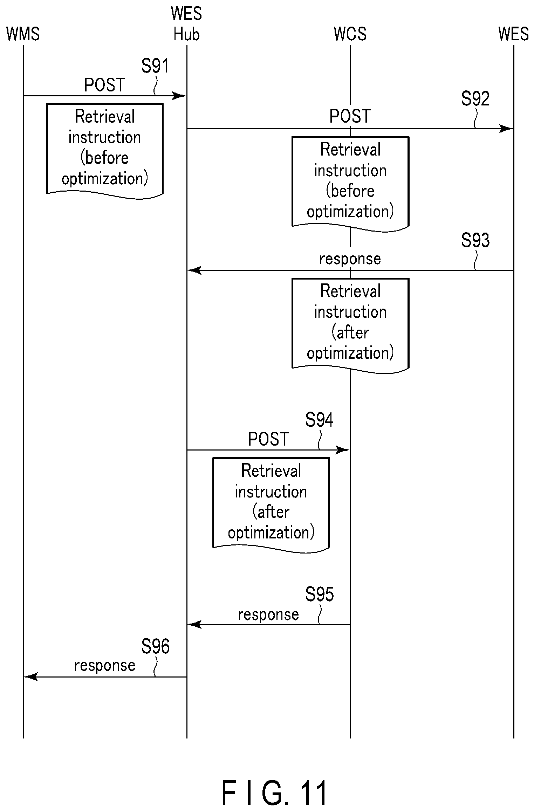

FIG. 11 is a sequence diagram illustrating still another operation example of the article handling system 1.

Herein, the WES 4 optimizes a retrieval instruction from the WMS 2.

First, the WMS 2 transmits a retrieval instruction (request) to the WES Hub 10 by POST (S91). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S92).

The WES 4 receives the retrieval instruction from the WES Hub 10. Upon receiving the retrieval instruction, the WES 4 optimizes the retrieval instruction. Upon optimizing the retrieval instruction, the WES 4 transmits the optimized retrieval instruction to the WES Hub 10 as a response (S93).

The processor 11 of the WES Hub 10 receives the optimized retrieval instruction from the WES 4 via the WES interface 19. Upon receiving the optimized retrieval instruction, the processor 11 transmits the optimized retrieval instruction to the WCS 3 by POST via the WCS interface 18 (S94).

The WCS 3 receives the optimized retrieval instruction from the WES Hub 10. Upon receiving the optimized retrieval instruction, the WCS 3 executes a predetermined process in accordance with the optimized retrieval instruction and then transmits a response to the WES Hub 10 (S95).

The processor 11 of the WES Hub 10 receives the response from the WCS 3 via the WCS interface 18. Upon receiving the response, the processor 11 transmits a response to the WMS 2 via the WMS interface 17 (S96).

The WMS 2 receives the response from the WES Hub 10. Upon the WMS 2 receiving the response, the article handling system 1 ends the operation.

The processor 11 of the WES Hub 10 may transmit, if S92 or S93 fails, a response indicating an error for the retrieval instruction to the WMS 2 or may time out the retrieval instruction.

The processor 11 may transmit, if S92 or S93 fails, the retrieval instruction before being optimized (the retrieval instruction received in S91) to the WCS 3 in S94. Through this operation, the article handling system 1 can continue the operation even when the communication with the WES 4 is interrupted.

Next, still another operation example of the article handling system 1 will be described.

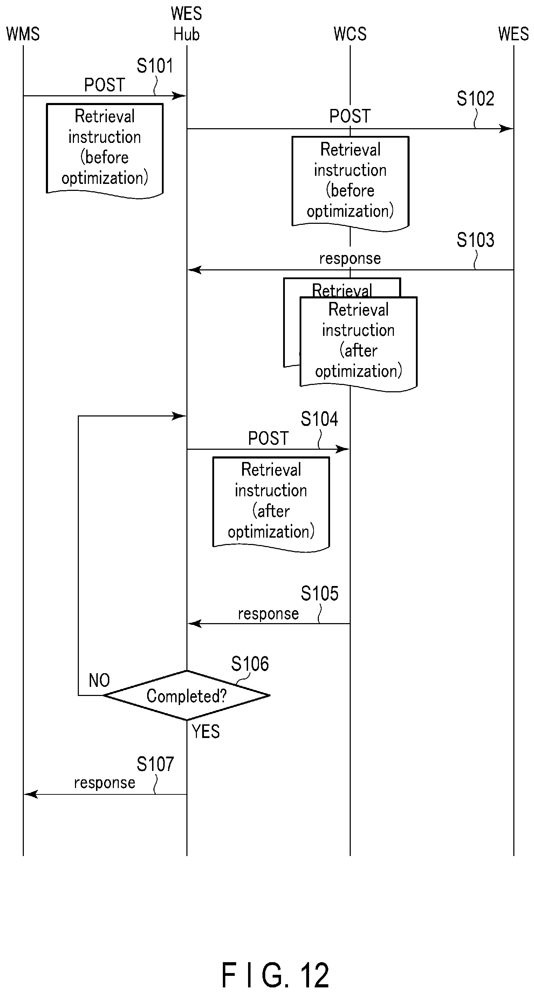

FIG. 12 is a sequence diagram illustrating still another operation example of the article handling system 1.

Herein, the WES 4 optimizes a retrieval instruction from the WMS 2. The WES 4 generates a plurality of optimized retrieval instructions.

First, the WMS 2 transmits a retrieval instruction (request) to the WES Hub 10 by POST (S101). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S102).

The WES 4 receives the retrieval instruction from the WES Hub 10. Upon receiving the retrieval instruction, the WES 4 optimizes the retrieval instruction. Herein, the WES 4 generates a plurality of optimized retrieval instructions. Upon generating the plurality of optimized retrieval instructions, the WES 4 transmits the plurality of optimized retrieval instructions to the WES Hub 10 as a response (S103).

The processor 11 of the WES Hub 10 receives the plurality of optimized retrieval instructions from the WES 4 via the WES interface 19. Upon receiving the plurality of optimized retrieval instructions, the processor 11 transmits one optimized retrieval instruction to the WCS 3 by POST via the WCS interface 18 (S104).

The WCS 3 receives the one optimized retrieval instruction from the WES Hub 10. Upon receiving the one optimized retrieval instruction, the WCS 3 executes a predetermined process in accordance with the one optimized retrieval instruction and then transmits a response to the WES Hub 10 (S105).

The processor 11 of the WES Hub 10 receives the response from WCS 3 via the WCS interface 18. Upon receiving the response, the processor 11 determines whether transmission of the optimized retrieval instructions is completed (S106). That is, the processor 11 determines whether or not there is a retrieval instruction that has not been transmitted to the WCS 3.

Upon determining that the transmission of the optimized retrieval instructions is not completed (S106, NO), the processor 11 returns to S104.

Upon determining that the transmission of the optimized retrieval instructions is completed (S106, YES), the processor 11 transmits a response to the WMS 2 via the WMS interface 17 (S107).

The WMS 2 receives the response from the WES Hub 10. Upon the WMS 2 receiving the response, the article handling system 1 ends the operation.

The processor 11 of the WES Hub 10, if S102 or S103 fails, may transmit a response indicating an error for the retrieval instruction from the WMS 2 or may time out the retrieval instruction. The processor 11 may transmit, if S102 or S103 fails, the optimized retrieval instruction before being optimized (the retrieval instruction received in S101) to the WCS 3 in S104.

Next, still another operation example of the article handling system 1 will be described.

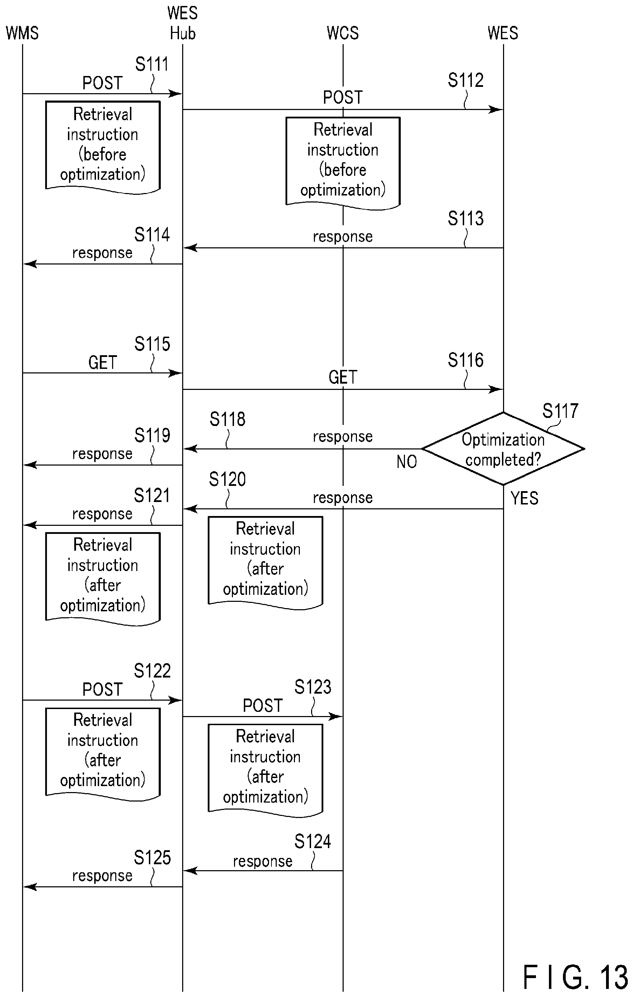

FIG. 13 is a sequence diagram illustrating still another operation example of the article handling system 1.

Herein, the WES 4 optimizes a retrieval instruction from the WMS 2. The WES 4 transmits a response indicating receipt of the retrieval instruction before optimization is completed.

First, the WMS 2 transmits a retrieval instruction (request) to the WES Hub 10 by POST (S111). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S112).

The WES 4 receives the retrieval instruction from the WES Hub 10. Upon receiving the retrieval instruction, the WES 4 transmits a response indicating receipt of the retrieval instruction to the WES Hub 10 (S113). Upon transmitting the response, the WES 4 starts optimizing the retrieval instruction.

The processor 11 of the WES Hub 10 receives the response via the WES interface 19. Upon receiving the response, the processor 11 transmits the response to the WMS 2 via the WMS interface 17 (S114).

The WMS 2 receives the response. Upon receiving the response, the WMS 2 transmits a request to the WES Hub 10 requesting the optimized retrieval instructions by GET (S115). The WMS 2 may transmit the request to the WES Hub 10 after a predetermined time has elapsed since the response was received.

The processor 11 of the WES Hub 10 receives the request from the WMS 2 by GET via the WMS interface 17. Upon receiving the request, the processor 11 transmits the request to the WES 4 by GET via the WES interface 19 (S116).

The WES 4 receives the request from the WES Hub 10. Upon receiving the request, the WES 4 determines whether optimization of the retrieval instruction is completed (S117). Upon determining that the optimization of the retrieval instruction is not completed (S117, NO), the WES 4 transmits a response indicating that the optimization of the retrieval instruction is not completed (e.g., a response indicating an error) to the WES Hub 10 (S118).

The processor 11 of the WES Hub 10 receives the response via the WES interface 19. Upon receiving the response, the processor 11 transmits the response to the WMS 2 via the WMS interface 17 (S119).

The WMS 2 receives the response. Upon receiving the response, the WMS 2 returns to S115. The WMS 2 may return to S115 after a predetermined period has elapsed since the response was received.

Upon determining that the optimization of the retrieval instruction is completed (S117, YES), the WES 4 transmits the optimized retrieval instruction to the WES Hub 10 as a response (S120).

The processor 11 of the WES Hub 10 receives the optimized retrieval instruction from the WES 4 via the WES interface 19. Upon receiving the optimized retrieval instruction, the processor 11 transmits the optimized retrieval instruction to the WMS 2 via the WMS interface 17 (S121).

The WMS 2 receives the optimized retrieval instruction from the WES Hub 10. Upon receiving the optimized retrieval instruction, the WMS 2 transmits the optimized retrieval instruction by POST to the WES Hub 10 (S122).

The processor 11 of the WES Hub 10 receives the optimized retrieval instruction from the WMS 2 via the WMS interface 17. Upon receiving the optimized retrieval instruction, the processor 11 transmits the optimized retrieval instruction to the WCS 3 by POST via the WCS interface 18 (S123).

The WCS 3 receives the optimized retrieval instruction from the WES Hub 10. Upon receiving the optimized retrieval instruction, the WCS 3 executes a predetermined process in accordance with the optimized retrieval instruction and then transmits a response to the WES Hub 10 (S124).

The processor 11 of the WES Hub 10 receives the response from the WCS 3 via the WCS interface 18. Upon receiving the response, the processor 11 transmits the response to the WMS 2 via the WMS interface 17 (S125).

The WMS 2 receives the response from the WES Hub 10. Upon the WMS 2 receiving the response, the article handling system 1 ends the operation.

Next, still another operation example of the article handling system 1 will be described.

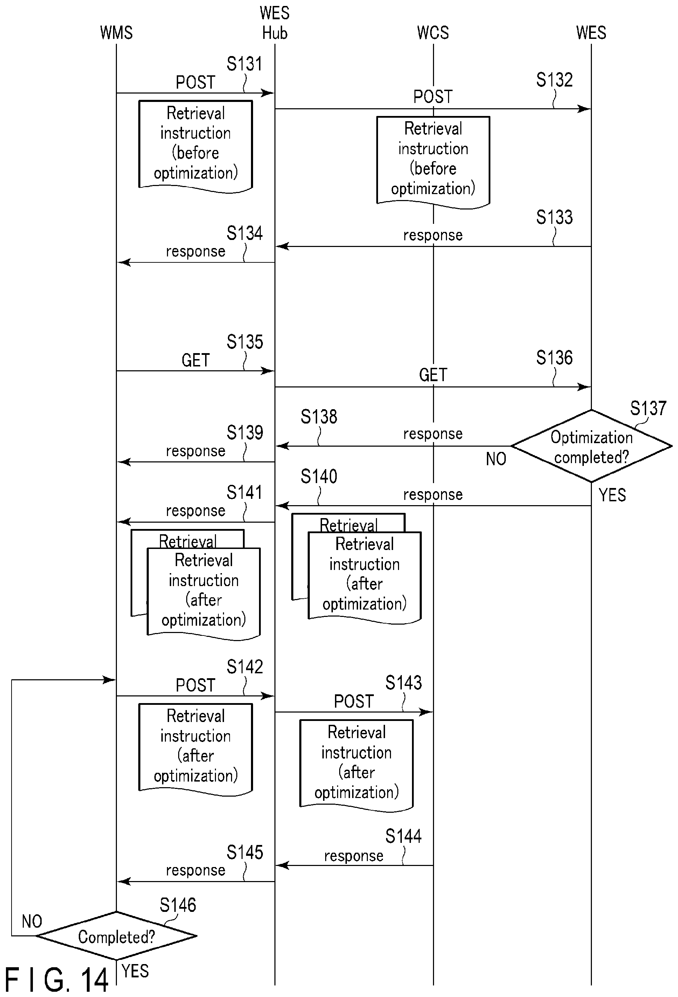

FIG. 14 is a sequence diagram illustrating still another operation example of the article handling system 1.

Herein, the WES 4 optimizes a retrieval instruction from the WMS 2. The WES 4 transmits a response indicating receipt of the retrieval instruction before optimization is completed. The WES 4 generates a plurality of optimized retrieval instructions. The processor 11 of the WES Hub 10 transmits the plurality of optimized retrieval instructions sequentially to the WCS 3.

First, the WMS 2 transmits a retrieval instruction (request) to the WES Hub 10 by POST (S131). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S132).

The WES 4 receives the retrieval instruction from the WES Hub 10. Upon receiving the retrieval instruction, the WES 4 transmits a response indicating receipt of the retrieval instruction to the WES Hub 10 (S133). Upon transmitting the response, the WES 4 starts optimizing the retrieval instruction.

The processor 11 of the WES Hub 10 receives the response via the WES interface 19. Upon receiving the response, the processor 11 transmits the response to the WMS 2 via the WMS interface 17 (S134).

The WMS 2 receives the response. Upon receiving the response, the WMS 2 transmits a request to the WES Hub 10 requesting the optimized retrieval instructions by GET (S135). The WMS 2 may transmit the request to the WES Hub 10 after a predetermined time has elapsed since the response was received.

The processor 11 of the WES Hub 10 receives the request from the WMS 2 via the WMS interface 17. Upon receiving the request, the processor 11 transmits the request to the WES 4 by GET via the WES interface 19 (S136).

The WES 4 receives the request from the WES Hub 10. Upon receiving the request, the WES 4 determines whether optimization of the retrieval instruction is completed (S137). Upon determining that the optimization of the retrieval instruction is not completed (S137, NO), the WES 4 transmits a response indicating that the optimization of the retrieval instruction is not completed (e.g., a response indicating an error) to the WES Hub 10 (S138).

The processor 11 of the WES Hub 10 receives the response via the WES interface 19. Upon receiving the response, the processor 11 transmits the response to the WMS 2 via the WMS interface 17 (S139).

The WMS 2 receives the response. Upon receiving the response, the WMS 2 returns to S135. The WMS 2 may return to S135 after a predetermined period has elapsed since the response was received.

Upon determining that the optimization of the retrieval instruction is completed (S137, YES), the WES 4 transmits a plurality of optimized retrieval instructions to the WES Hub 10 as a response (S140).

The processor 11 of the WES Hub 10 receives the plurality of optimized retrieval instructions from the WES 4 via the WES interface 19. Upon receiving the optimized retrieval instructions, the processor 11 transmits the plurality of optimized retrieval instructions to the WMS 2 via the WMS interface 17 (S141).

The WMS 2 receives the plurality of optimized retrieval instructions from the WES Hub 10. Upon receiving the plurality of optimized retrieval instructions, the WMS 2 transmits one optimized retrieval instruction by POST to the WES Hub 10 (S142).

The processor 11 of the WES Hub 10 receives the one optimized retrieval instruction from the WMS 2 via the WMS interface 17. Upon receiving the one optimized retrieval instruction, the processor 11 transmits the one optimized retrieval instruction to the WCS 3 by POST via the WCS interface 18 (S143).

The WCS 3 receives the one optimized retrieval instruction from the WES Hub 10. Upon receiving the one optimized retrieval instruction, the WCS 3 executes a predetermined process in accordance with the one optimized retrieval instruction and then transmits a response to the WES Hub 10 (S144).

The processor 11 of the WES Hub 10 receives the response from the WCS 3 via the WCS interface 18. Upon receiving the response, the processor 11 transmits the response to the WMS 2 via the WMS interface 17 (S145).

The WMS 2 receives the response from the WES Hub 10. Upon receiving the response, the WMS 2 determines whether transmission of the optimized retrieval instruction is completed (S146). That is, the WMS 2 determines whether or not there is a retrieval instruction that has not been transmitted to the WCS 3.

Upon determining that the transmission of the optimized retrieval instruction is not completed (S146, NO), the WMS 2 returns to S142.

Upon the WMS 2 determining that the transmission of the optimized retrieval instruction is completed (S146, YES), the article handling system 1 ends the operation.

Next, still another operation example of the article handling system 1 will be described.

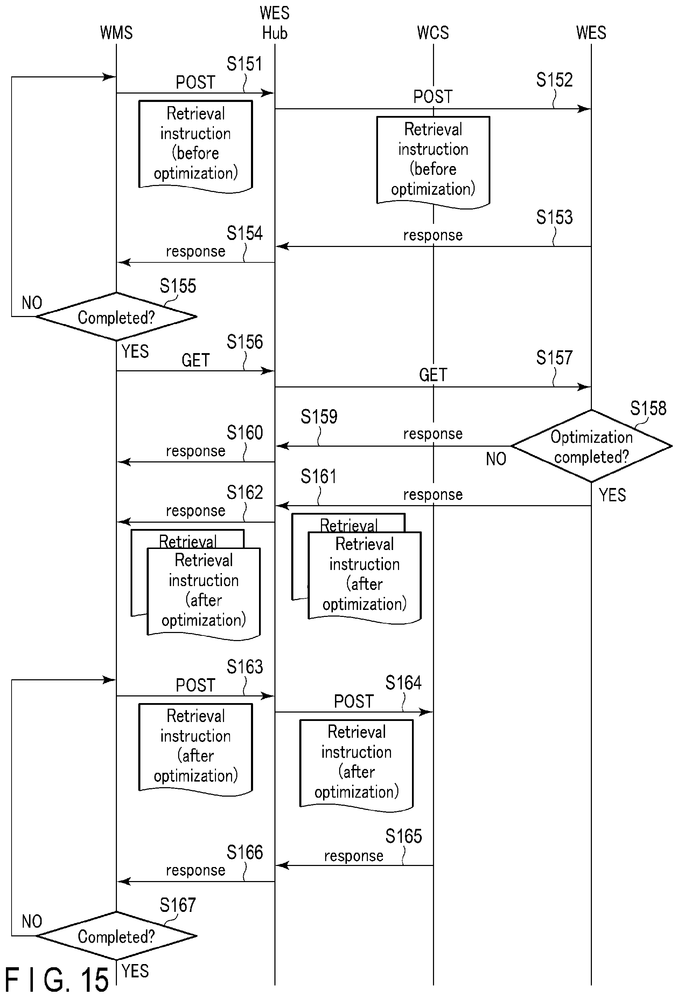

FIG. 15 is a sequence diagram illustrating still another operation example of the article handling system 1.

Herein, the WMS 2 transmits a plurality of retrieval instructions to the WES 4. The WES 4 optimizes a retrieval instruction from the WMS 2. The WES 4 transmits a response indicating receipt of the retrieval instruction before optimization is completed. The processor 11 of the WES Hub 10 transmits a plurality of retrieval instructions sequentially to the WES 4.

First, the WMS 2 transmits a retrieval instruction (request) to the WES Hub 10 by POST (S151). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S152).

The WES 4 receives the retrieval instruction from the WES Hub 10. Upon receiving the retrieval instruction, the WES 4 transmits a response indicating receipt of the retrieval instruction to the WES Hub 10 (S153). Upon transmitting the response, the WES 4 starts optimizing the retrieval instruction.

The processor 11 of the WES Hub 10 receives the response via the WES interface 19. Upon receiving the response, the processor 11 transmits the response to the WMS 2 via the WMS interface 17 (S154).

The WMS 2 receives the response. Upon receiving the response, the WMS 2 determines whether transmission of the optimized retrieval instruction is completed (S155). That is, the WMS 2 determines whether or not there is a retrieval instruction that has not been transmitted to the WES 4.

Upon determining that the transmission of the retrieval instruction is not completed (S155, NO), the WMS 2 returns to S151.

Upon determining that the transmission of the retrieval instruction is completed (S155, YES), the WMS 2 transmits a request requesting a plurality of optimized retrieval instructions to the WES Hub 10 by GET (S156). The WMS 2 may transmit the request to the WES Hub 10 after a predetermined time has elapsed since the response was received.

The processor 11 of the WES Hub 10 receives the request from the WMS 2 via the WMS interface 17. Upon receiving the request, the processor 11 transmits the request to the WES 4 by GET via the WES interface 19 (S157) .

The WES 4 receives the request from the WES Hub 10. Upon receiving the request, the WES 4 determines whether optimization of the retrieval instruction is completed (S158). Upon determining that the optimization of the retrieval instruction is not completed (S158, NO), the WES 4 transmits a response indicating that the optimization of the retrieval instruction is not completed (e.g., a response indicating an error) to the WES Hub 10 (S159).

The processor 11 of the WES Hub 10 receives the response via the WES interface 19. Upon receiving the response, the processor 11 transmits the response to the WMS 2 via the WMS interface 17 (S160).

The WMS 2 receives the response. Upon receiving the response, the WMS 2 returns to S156. The WMS 2 may return to S156 after a predetermined period has elapsed since the response was received.

Upon determining that the optimization of the retrieval instruction is completed (S158, YES), the WES 4 transmits a plurality of optimized retrieval instructions to the WES Hub 10 as a response (S161).

The processor 11 of the WES Hub 10 receives the plurality of optimized retrieval instructions from the WES 4 via the WES interface 19. Upon receiving the optimized retrieval instructions, the processor 11 transmits the optimized retrieval instructions to the WMS 2 via the WMS interface 17 (S162).

The WMS 2 receives the plurality of optimized retrieval instructions from the WES Hub 10. Upon receiving the plurality of optimized retrieval instructions, the WMS 2 transmits one optimized retrieval instruction by POST to the WES Hub 10 (S163).

The processor 11 of the WES Hub 10 receives the one optimized retrieval instruction from the WMS 2 via the WMS interface 17. Upon receiving the one optimized retrieval instruction, the processor 11 transmits the one optimized retrieval instruction to the WCS 3 by POST via the WCS interface 18 (S164).

The WCS 3 receives the one optimized retrieval instruction from the WES Hub 10. Upon receiving the one optimized retrieval instruction, the WCS 3 executes a predetermined process in accordance with the one optimized retrieval instruction and then transmits a response to the WES Hub 10 (S165).

The processor 11 of the WES Hub 10 receives the response from the WCS 3 via the WCS interface 18. Upon receiving the response, the processor 11 transmits the response to the WMS 2 via the WMS interface 17 (S166).

The WMS 2 receives the response from the WES Hub 10. Upon the WMS 2 receiving the response, the WMS 2 determines whether transmission of the optimized retrieval instruction is completed (S167). That is, the WMS 2 determines whether or not there is a retrieval instruction that has not been transmitted to the WCS 3.

Upon determining that the transmission of the optimized retrieval instruction is not completed (S167, NO), the WMS 2 returns to S163.

Upon the WMS 2 determining that the transmission of the optimized retrieval instruction is completed (S167, YES), the article handling system 1 ends the operation.

Next, still another operation example of the article handling system 1 will be described.

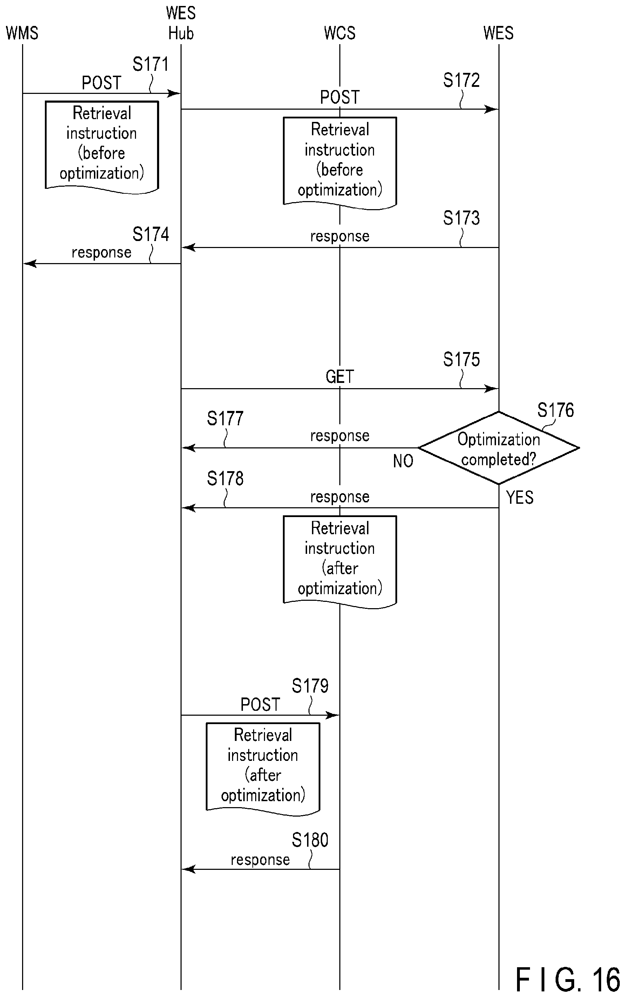

FIG. 16 is a sequence diagram illustrating still another operation example of the article handling system 1.

Herein, the WES 4 optimizes a retrieval instruction from the WMS 2. The WES 4 transmits a response indicating receipt of the retrieval instruction before optimization is completed. The WES Hub 10 does not transmit the optimized retrieval instruction to the WMS 2.

First, the WMS 2 transmits a retrieval instruction (request) to the WES Hub 10 by POST (S171). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S172).

The WES 4 receives the retrieval instruction from the WES Hub 10. Upon receiving the retrieval instruction, the WES 4 transmits a response indicating receipt of the retrieval instruction to the WES Hub 10 (S173). Upon transmitting the response, the WES 4 starts optimizing the retrieval instruction.

The processor 11 of the WES Hub 10 receives the response via the WES interface 19. Upon receiving the response, the processor 11 transmits the response to the WMS 2 via the WMS interface 17 (S174).

The WMS 2 receives the response.

The processor 11 of the WES Hub 10 transmits a request requesting an optimized retrieval instruction to the WES 4 by GET via the WES interface 19 (S175). The processor 11 may transmit the request to the WES 4 after a predetermined time has elapsed since the response was received.

The WES 4 receives the request from the WES Hub 10. Upon receiving the request, the WES 4 determines whether optimization of the retrieval instruction is completed (S176). Upon determining that the optimization of the retrieval instruction is not completed (S176, NO), the WES 4 transmits a response indicating that the optimization of the retrieval instruction is not completed (e.g., a response indicating an error) to the WES Hub 10 (S177).

The processor 11 of the WES Hub 10 receives the response via the WES interface 19. Upon receiving the response, the processor 11 returns to S175. The processor 11 may return to S175 after a predetermined period has elapsed since the response was received.

Upon determining that the optimization of the retrieval instruction is completed (S176, YES), the WES 4 transmits the optimized retrieval instruction to the WES Hub 10 as a response (S178).

The processor 11 of the WES Hub 10 receives the optimized retrieval instruction from the WES 4 via the WES interface 19. Upon receiving the optimized retrieval instruction, the processor 11 transmits the optimized retrieval instruction to the WCS 3 by POST via the WCS interface 18 (S179).

The WCS 3 receives the optimized retrieval instruction from the WES Hub 10. Upon receiving the optimized retrieval instruction, the WCS 3 executes a predetermined process in accordance with the optimized retrieval instruction and then transmits a response to the WES Hub 10 (S180).

The processor 11 of the WES Hub 10 receives the response from the WCS 3 via the WCS interface 18. Upon the processor 11 receiving the response, the article handling system 1 ends the operation.

Next, still another operation example of the article handling system 1 will be described.

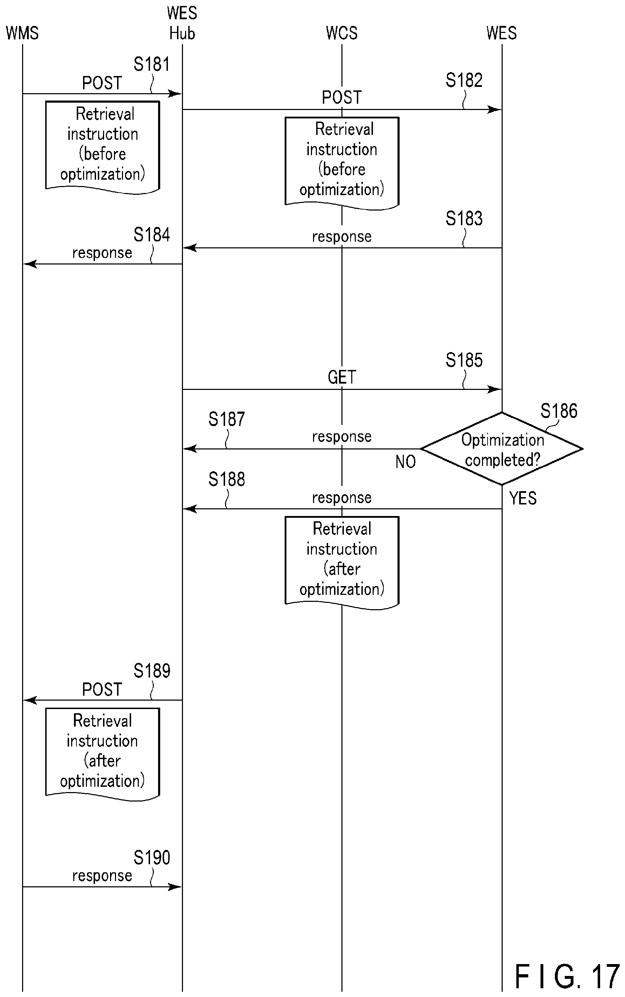

FIG. 17 is a sequence diagram illustrating still another operation example of the article handling system 1.

Herein, the WES 4 optimizes a retrieval instruction from the WMS 2. The WES 4 transmits a response indicating receipt of the retrieval instruction before optimization is completed. The article handling system 1 provides the optimized retrieval instruction to the WMS 2 but does not provide the optimized retrieval instruction to the WCS 3.

First, the WMS 2 transmits a retrieval instruction (request) to the WES Hub 10 by POST (S181). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S182).

The WES 4 receives the retrieval instruction from the WES Hub 10. Upon receiving the retrieval instruction, the WES 4 transmits a response indicating receipt of the retrieval instruction to the WES Hub 10 (S183). Upon transmitting the response, the WES 4 starts optimizing the retrieval instruction.

The processor 11 of the WES Hub 10 receives the response via the WES interface 19. Upon receiving the response, the processor 11 transmits the response to the WMS 2 via the WMS interface 17 (S184).

The WMS 2 receives the response.

The processor 11 of the WES Hub 10 transmits a request requesting an optimized retrieval instruction to the WES 4 by GET via the WMS interface 17 (S185). The processor 11 may transmit the request to the WES 4 after a predetermined time has elapsed since the response was received.

The WES 4 receives the request from the WES Hub 10. Upon receiving the request, the WES 4 determines whether optimization of the retrieval instruction is completed (S186). Upon determining that the optimization of the retrieval instruction is not completed (S186, NO), the WES 4 transmits a response indicating that the optimization of the retrieval instruction is not completed (e.g., a response indicating an error) to the WES Hub 10 (S187).

The processor 11 of the WES Hub 10 receives the response via the WES interface 19. Upon receiving the response, the processor 11 returns to S185. The processor 11 may return to S185 after a predetermined period has elapsed since the response was received.

Upon determining that the optimization of the retrieval instruction is completed (S186, YES), the WES 4 transmits the optimized retrieval instruction to the WES Hub 10 as a response (S188).

The processor 11 of the WES Hub 10 receives the optimized retrieval instruction from the WES 4 via the WES interface 19. Upon the processor 11 receiving the optimized retrieval instruction, the processor 11 transmits the optimized retrieval instruction to the WMS 2 by POST via the WMS interface 17 (S189).

The WMS 2 receives the optimized retrieval instruction from the WES Hub 10. Upon receiving the optimized retrieval instruction, the WMS 2 executes a predetermined process in accordance with the optimized retrieval instruction and then transmits a response to the WES Hub 10 (S190).

The processor 11 of the WES Hub 10 receives the response from the WMS 2 via the WMS interface 17. Upon the processor 11 receiving the response, the article handling system 1 ends the operation.

Next, still another operation example of the article handling system 1 will be described.

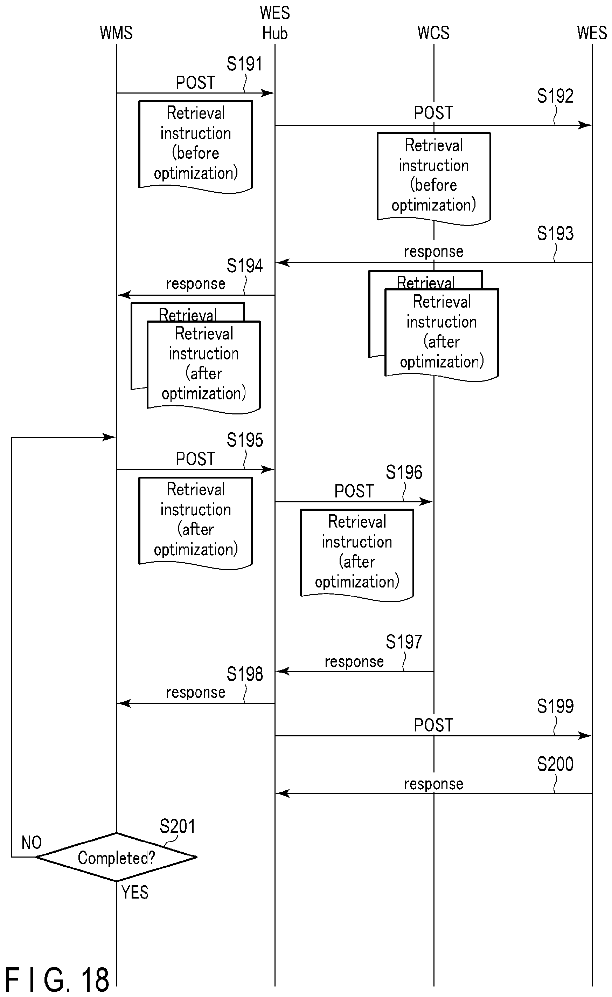

FIG. 18 is a sequence diagram illustrating still another operation example of the article handling system 1.

Herein, the WES 4 optimizes a retrieval instruction from the WMS 2. The WES 4 transmits a response indicating receipt of the retrieval instruction before optimization is completed. The WES 4 generates a plurality of optimized retrieval instructions. The WES Hub 10 transmits a communication log to the WES 4.

First, the WMS 2 transmits a retrieval instruction (request) to the WES Hub 10 by POST (S191). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S192).

The WES 4 receives the retrieval instruction from the WES Hub 10. Upon receiving the retrieval instruction, the WES 4 transmits a plurality of optimized retrieval instructions to the WES Hub 10 as a response (S193).

The processor 11 of the WES Hub 10 receives the plurality of optimized retrieval instructions from the WES 4 via the WES interface 19. Upon receiving the optimized retrieval instructions, the processor 11 transmits the plurality of optimized retrieval instructions to the WMS 2 via the WMS interface 17 (S194).

The WMS 2 receives the plurality of optimized retrieval instructions from the WES Hub 10. Upon receiving the plurality of optimized retrieval instructions, the WMS 2 transmits one optimized retrieval instruction by POST to the WES Hub 10 (S195).

The processor 11 of the WES Hub 10 receives the one optimized retrieval instruction from the WMS 2 via the WMS interface 17. Upon receiving the one optimized retrieval instruction, the processor 11 transmits the one optimized retrieval instruction to the WCS 3 by POST via the WCS interface 18 (S196).

The WCS 3 receives the one optimized retrieval instruction from the WES Hub 10. Upon receiving the one optimized retrieval instruction, the WCS 3 executes a predetermined process in accordance with the one optimized retrieval instruction and then transmits a response to the WES Hub 10 (S197).

The processor 11 of the WES Hub 10 receives the response from the WCS 3 via the WCS interface 18. Upon receiving the response, the processor 11 transmits the response to the WMS 2 via the WMS interface 17 (S198).

Upon transmitting the response to the WMS 2, the processor 11 transmits a communication log between the WMS 2 and the WCS 3 to the WES 4 by POST via the WES interface 19 (S199). For example, the processor 11 transmits data transmitted in S195 to S198 as the communication log to the WES 4.

The WES 4 receives the communication log from the WES Hub 10. Upon receiving the communication log, the WES 4 transmits a response to the WES Hub 10 (S200).

The processor 11 of the WES Hub 10 receives the response from the WES 4 via the WES interface 19.

The WMS 2 receives the response from the WES Hub 10. Upon receiving the response, the WMS 2 determines whether transmission of the optimized retrieval instruction is completed (S201). That is, the WMS 2 determines whether or not there is a retrieval instruction that has not been transmitted to the WCS 3.

Upon determining that the transmission of the optimized retrieval instruction is not completed (S201, NO), the WMS 2 returns to S195.

Upon the WMS 2 determining that the transmission of the optimized retrieval instruction is completed (S201, YES), the article handling system 1 ends the operation.

The WMS 2 may transmit a request such as a storage instruction, a storage cancel instruction, and a retrieval cancel instruction to the WES Hub 10.

The article handling system 1 may transmit data using PUT instead of POST, or may provide a data operation instruction using DELETE.

The article handling system configured as described above can handle articles using the WES connected via one-way communication through an external network. Thus, the article handling system can use an external WES without using a virtual private network (VPN) or the like for communication with the WES. Therefore, the article handling system can externalize the WES in an effective manner. Furthermore, the article handling system can continue to operate even when communication with the WES is interrupted.

### (Second Embodiment)

Next, the second embodiment will be described.

An article handling system according to the second embodiment differs from that according to the first embodiment in that a plurality of WCSs are provided. Therefore, the same reference numerals are given to the other points, and the detailed description thereof will be omitted.

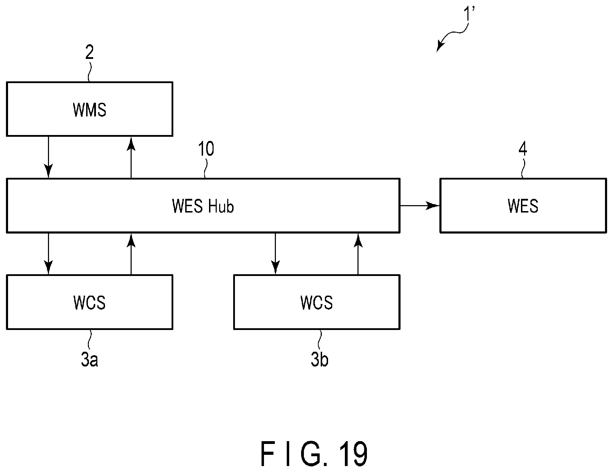

FIG. 19 shows a configuration example of an article handling system 1' according to the second embodiment. As shown in FIG. 19, the article handling system 1' includes a WMS 2, a WCS 3a, a WCS 3b, a WES 4, a WES Hub 10, and the like.

The WES Hub 10 is connected to the WCS 3a and the WCS 3b via a local network or the like.

The WCS 3a and the WCS 3b are similar to the WCS 3.

A WCS interface 18 is an interface that transmits and receives data to and from the WCS 3a and the WCS 3b.

The article handling system 1' may include other configurations as needed in addition to the configuration shown in FIG. 19, or a specific configuration may be excluded from the article handling system 1'.

Next, an operation example of the article handling system 1' will be described.

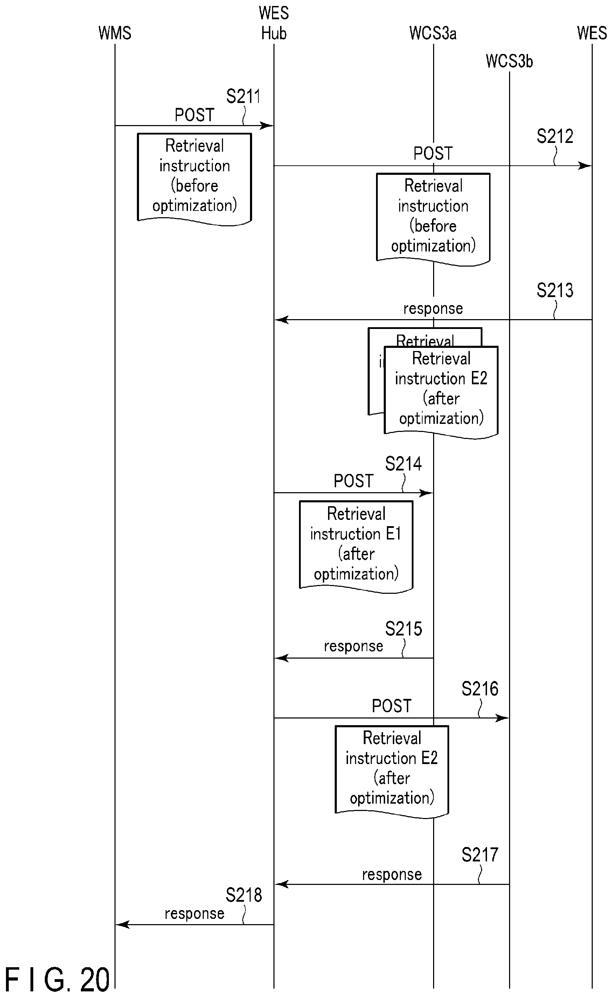

FIG. 20 is a sequence diagram illustrating an operation example of the article handling system 1'.

Herein, the WES 4 optimizes a retrieval instruction from the WSM 2. The WES 4 generates a plurality of optimized retrieval instructions. Herein, the WES 4 generates an optimized retrieval instruction to be processed by the WCS 3a and an optimized retrieval instruction to be processed by the WCS 3b. For example, the WES 4 generates a retrieval instruction E1 as a retrieval instruction for retrieving an article stored in a rack managed by the WCS 3a. The WES 4 generates a retrieval instruction E2 as a retrieval instruction for retrieving an article stored in a rack managed by the WCS 3b.

First, the WMS 2 transmits a retrieval instruction (request) to the WES Hub 10 by POST (S211). Herein, the retrieval instruction is a request (third request) requesting the WES 4 to optimize itself.

The processor 11 of the WES Hub 10 receives the retrieval instruction from the WMS 2 via the WMS interface 17. Upon receiving the retrieval instruction, the processor 11 transmits the received retrieval instruction to the WES 4 by POST via the WES interface 19 (S212).

The WES 4 receives the retrieval instruction from the WES Hub 10. Upon receiving the retrieval instruction, the WES 4 optimizes the retrieval instruction. Herein, the WES 4 generates a plurality of optimized retrieval instructions. Upon generating the plurality of optimized retrieval instructions, the WES 4 transmits the plurality of optimized retrieval instructions to the WES Hub 10 as a response (S213). Herein, the WES 4 transmits, to the WES Hub 10, the retrieval instruction E1 to be processed by the WCS 3a and the retrieval instruction E2 to be processed by the WCS 3b.

The processor 11 of the WES Hub 10 receives the plurality of optimized retrieval instructions from the WES 4 via the WES interface 19. Upon receiving the plurality of optimized retrieval instructions, the processor 11 transmits the retrieval instruction E1 to the WCS 3a by POST via the WCS interface 18 (S214).

The WCS 3a receives the retrieval instruction E1 from the WES Hub 10. Upon receiving the optimized retrieval instruction E1, the WCS 3a executes a predetermined process in accordance with the retrieval instruction E1 and then transmits a response to the WES Hub 10 (S215).

The processor 11 of the WES Hub 10 receives the response from the WCS 3a via the WCS interface 18. Upon receiving the response, the processor 11 transmits the retrieval instruction E2 to the WCS 3a by POST via the WCS interface 18 (S216).

The WCS 3b receives the retrieval instruction E2 from the WES Hub 10. Upon receiving the retrieval instruction E1, the WCS 3b executes a predetermined process in accordance with the retrieval instruction E2 and then transmits a response to the WES Hub 10 (S217).

The processor 11 of the WES Hub 10 receives the response from the WCS 3b via the WCS interface 18. Upon receiving the response, the processor 11 transmits the response to the WMS 2 via the WMS interface 17 (S218).

The WMS 2 receives the response from the WES Hub 10. Upon the WMS 2 receiving the response, the article handling system 1 ends the operation.

The article handling system configured as described above includes the plurality of WCSs. The article handling system assigns the optimized retrieval instructions to the respective WCSs. Therefore, the article handling system can assign the retrieval instructions to the WCSs in an effective manner.

### (Third Embodiment)

An article handling system according to the third embodiment is different from that according to the first embodiment in that a plurality of WMSs are provided. Therefore, the same reference numerals are given to the other points, and the detailed description thereof will be omitted.

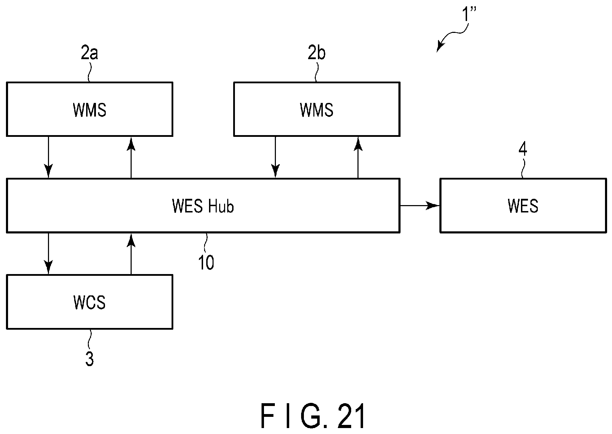

FIG. 21 shows a configuration example of an article handling system 1'' according to the third embodiment. As shown in FIG. 21, the article handling system 1'' includes a WMS 2a, a WMS 2b, a WCS 3, a WES 4, a WES Hub 10, and the like.

The WES Hub 10 is connected to the WMS 2a and the WMS 2b via a local network or the like.

The WMS 2a and the WMS 2b are similar to the WMS 2.

A WMS interface 17 is an interface that transmits and receives data to and from the WMS 2a and the WMS 2b.

The article handling system 1'' may include other configurations as needed in addition to the configuration shown in FIG. 21, or a specific configuration may be excluded from the article handling system 1".

An operation example of the article handling system 1" is the same as that of the article handling system 1, and thus the description thereof will be omitted.

The article handling system configured as described above can process requests from a plurality of WMSs by using a WES.

The program according to the present embodiment may be transferred in a state of being stored in an electronic device or in a state of not being stored in an electronic device. In the latter case, the program may be transferred through a network or may be transferred in a state of being stored in a storage medium. The storage medium is a non-transitory tangible medium. The storage medium is a computer-readable medium. The storage medium may be of any type, such as a CD-ROM or a memory card, as long as it can store programs and can be read by the computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing method executed by a processor, the method comprising:
receiving a request from a first apparatus;
transmitting the request to a second apparatus;
receiving a response to the request from the second apparatus;
transmitting the response to the first apparatus; and
transmitting data related to communication between the first apparatus and the second apparatus to a third apparatus via one-way communication.

2. The information processing method according to claim 1, wherein the data is the request or the response.

3. The information processing method according to claim 2, wherein the transmitting the data to the third apparatus comprises transmitting the request to the third apparatus and transmitting the response to the third apparatus.

4. The information processing method according to claim 2, wherein
the request is transmitted by GET, and
the data includes a query of the request and the response.

5. The information processing method according to claim 1, wherein the transmitting the data to the third apparatus comprises transmitting, in response to the request being a first request, the data to the third apparatus after transmitting the response to the first apparatus, and transmitting, in response to the request being a second request, the data to the third apparatus before transmitting the response to the first apparatus.

6. The information processing method according to claim 1, wherein
the request comprises a retrieval instruction,
the transmitting the data to the third apparatus comprises transmitting the retrieval instruction to the third apparatus,
the method comprises receiving an optimized retrieval instruction from the third apparatus, and
the transmitting the request to the second apparatus comprises transmitting the optimized retrieval instruction to the second apparatus.

7. The information processing method according to claim 6, wherein
the receiving the optimized retrieval instruction from the third apparatus comprises receiving a plurality of optimized retrieval instructions from the third apparatus,
the transmitting the request to the second apparatus comprises transmitting one of the optimized retrieval instructions sequentially, and
the transmitting the response to the first apparatus comprises transmitting the response to the first apparatus upon completion of transmission of the plurality of optimized retrieval instructions.

8. The information processing method according to claim 6, comprising:
receiving a response indicating receipt of the retrieval instruction from the third apparatus;
transmitting the response indicating receipt of the retrieval instruction to the first apparatus; and
transmitting a request requesting the optimized retrieval instruction to the third apparatus.

9. The information processing method according to claim 6, wherein
the receiving the request from the first apparatus comprises receiving a plurality of retrieval instructions from the first apparatus, and
the transmitting the data to the third apparatus comprises transmitting one of the retrieval instructions sequentially to the third apparatus.

10. The information processing method according to claim 6, wherein the transmitting the request to the second apparatus comprises transmitting one of optimized retrieval instructions to one of second apparatuses and transmitting another optimized retrieval instruction to another second apparatus.

11. The information processing method according to any one of claims 1 to 10, wherein the second apparatus is configured to control a device that processes an article.

12. An information processing apparatus comprising:
a first interface configured to transmit and receive data to and from a first apparatus;
a second interface configured to transmit and receive data to and from a second apparatus;
a third interface configured to transmit and receive data to and from a third apparatus via one-way communication; and
a processor configured to:
receive a request from the first apparatus via the first interface;
transmit the request to the second apparatus via the second interface;
receive a response to the request from the second apparatus via the second interface;
transmit the response to the first apparatus via the first interface; and
transmit data related to communication between the first apparatus and the second apparatus to the third apparatus via the third interface.

13. A program executed by a processor, the program causing the processor to execute:
a function of receiving a request from a first apparatus;
a function of transmitting the request to a second apparatus;
a function of receiving a response to the request from the second apparatus;
a function of transmitting the response to the first apparatus; and
a function of transmitting data related to communication between the first apparatus and the second apparatus to a third apparatus via one-way communication.

14. A non-transitory computer-readable storage medium storing a program executed by a processor, the program causing the processor to execute:
a function of receiving a request from a first apparatus;
a function of transmitting the request to a second apparatus;
a function of receiving a response to the request from the second apparatus;
a function of transmitting the response to the first apparatus; and
a function of transmitting data related to communication between the first apparatus and the second apparatus to a third apparatus by one-way communication.
